# EUROPÄISCHE PATENTSCHRIFT

(11) **EP 2 846 049 B1**
(45) Veröffentlichungstag und Bekanntmachung des Hinweises auf die Patenterteilung: **15.02.2017**
(21) Anmeldenummer: 14178886.9
(22) Anmeldetag: 29.07.2014
(51) Int. Cl.: F16B 5/02

(54) **Befestigungssystem mit Exzenter**
Fastening system with eccentric
Système de fixation avec système excentrique

(30) Priorität: 09.08.2013 DE 102013108650
(43) Veröffentlichungstag der Anmeldung: 11.03.2015
(73) Patentinhaber: WITTENSTEIN SE, 97999 Igersheim (DE)
(72) Erfinder: Endres, Jochen, 97258 Hemmersheim (DE); Heckmann, Marco, 74744 Ahorn (DE)
(74) Vertreter: Zimmermann & Partner Patentanwälte mbB

(56) Entgegenhaltungen:
- DE-A1- 3 810 205
- JP-A- 2003 127 037
- US-A- 3 408 924
- US-A1- 2009 162 141

## Beschreibung

### Gebiet der Erfindung

Die Erfindung betrifft ein Befestigungssystem für ein lineares Maschinenelement nach dem Anspruch 1 und einen Exzenter, ein lineares Maschinenelement und ein Verfahren zum Befestigen eines linearen Maschinenelementes nach den nebengeordneten Ansprüchen.

### Stand der Technik

Bei der Montage von linearen Maschinenelementen, insbesondere Zahnstangen oder Linearführungen, kommt es darauf an, dass die Maschinenelemente über die gesamte Länge an ein Maschinenbett angepresst sind und richtig ausgerichtet sind. Dies ist vor allem bei hochgenauen Anwendungen notwendig. Aus dem Stand der Technik sind Verfahren bekannt, bei welchen ein Maschinenelement durch eine Schraubzwinge an das Maschinenbett angepresst und im Anschluss mittels Schrauben fixiert wird. Dies ist ein iterativer Prozess, da bspw. Zahnstangen durch eine Schraubzwinge nur über eine kurze Strecke angepresst werden können. Ist die Zahnstange an der Stelle befestigt, wird die Schraubzwinge an der nächsten Stelle angezogen, um dort wieder die Zahnstange zu fixieren. Weitere Nachteile sind, dass nicht beliebig viele Schraubzwingen vorhanden sind, das Anziehen der Schraubzwingen unkomfortabel sein kann durch Behinderungen durch das Maschinenbett und dass durch die Schraubzwingen die Zugänglichkeit zu den Schrauben beschränkt wird.

Ein weiteres Problem bei der Montage ist die Abstandseinstellung zweier Zahnstangen zueinander. Hierbei wird meist zuerst eine Montagehilfe, welche die negative Zahnform besitzt mit einer Schraubzwinge über beide Enden der Zahnstangen aufgepresst und dann die neu zu montierende Zahnstange leicht angeschraubt. Im Anschluss wird die Feinjustierung mit einem Hammer und einem Stößel durch Schläge realisiert, wobei der Stößel auch zum Teil direkt an den Zahnflanken angesetzt wird.

Die EP 474 397 A1 beschreibt eine Vorrichtung zur Montage von Linearführungen an einem Maschinenbett mittels eines Bolzens, welcher drehbar in einer Bohrung des Maschinenbetts angeordnet werden kann und mittels dessen Kopf die Linearführung an einen Anschlag des Maschinenbetts gepresst werden kann. Der Kopf ist dabei exzentrisch zu einer Mittelachse des Bolzens ausgeführt. Zur Sicherung der Position der Linearführung in Richtung der Längsachse des Bolzens müssen zusätzliche Spannelemente vorgesehen werden.

Für die Anordnung der Bolzen neben der Linearführung sind separate Bohrungen im Maschinenbett notwendig. Dies führt zu einem erhöhten Aufwand und ist daher unerwünscht. Die vielen benötigten Teile können hohe Herstellkosten und eine aufwendige Montage nach sich ziehen.

Aus der JP 2003127037 ist ein Verfahren zur Montage von Linearführungen mit einem Langloch und einem Exzenter bekannt.

Die DE 38 10 205 A1 offenbart eine Montagevorrichtung für ein exzentrisches Lager eines Präzisions-Gleit-Systems.

### Offenbarung der Erfindung

Aufgabe der Erfindung ist es, aus dem Stand der Technik bekannte Befestigungssysteme für lineare Maschinenelemente zu verbessern. Insbesondere sollten ein einfacher Aufbau oder eine unkomplizierte, schnelle Montage möglich sein. Weiterhin ist eine hohe Genauigkeit oder Belastbarkeit wünschenswert. Die Herstellungskosten sollten gesenkt werden. Lineare Maschinenelemente sollten zuverlässig mit einer einfachen Montage exakt montierbar sein.

Die Aufgabe wird mit einem Befestigungssystem für ein lineares Maschinenelement nach dem Anspruch 1, und einem Verfahren zum Befestigen eines linearen Maschinenelementes nach Anspruch 8 gelöst. Typische Weiterbildungen sind in den Unteransprüchen angegeben.

Typische Ausführungsformen betreffen ein Befestigungssystem zur Befestigung in einem Maschinenbett für ein lineares Maschinenelement, mit einem Spannelement, welches einen Schaft und einen typischerweise kreisrunden Kopf aufweist. Der Durchmesser des Kopfes ist üblicherweise größer ist als der Durchmesser des Schafts. Dies ermöglicht ein Anspannen gegen das lineare Maschinenelement. Weiterhin umfassen typische Ausführungsformen einen Exzenter, welcher eine Hülse mit einer zu dem Außenumfang der Hülse exzentrischen und kreisrunden Bohrung umfasst. Weiterhin umfassen typische Exzenter ein Drehmomentübertragungselement. Typische Drehmomentübertragungselemente sind Muttern, Innensechskante, Inbus-Verbinder oder andere Strukturen, welche ein Ansetzen eines Werkzeugs zum Verdrehen des Exzenters um seine Längsachse ermöglich. Die Längsachse ist die Achse, welche typischerweise parallel zur Achse des Spannelementes ausgerichtet ist. Als Spannelement kommen bei typischen Ausführungsformen Schrauben oder Bolzen zum Einsatz, typischerweise mit einem Kopf, welcher ein Ansetzen eines Werkzeugs zum Verdrehen und Spannen des Spannelementes ermöglicht. Ein typischer Kopf umfasst einen Inbus-Verbinder oder einen Torx-Verbinder. Der Außendurchmesser des Kopfes des Spannelementes ist typischerweise kleiner als der Innendurchmesser der Bohrung oder entspricht typischerweise zumindest im Wesentlichen dem Innendurchmesser der Bohrung. Damit wird ein Aufsetzen des Exzenters auf den Kopf ermöglicht. Bei typischen Ausführungsformen ist die Bohrung derart groß, dass der Exzenter auf den Kopf aufsetzbar ist. Bei manchen Ausführungsbeispielen werden zusätzliche Anpassungshülsen zwischen dem Kopf und der Hülse vorgesehen, um einen unterschiedlichen Innendurchmesser der Hülse gegenüber dem Außendurchmesser des Kopfes auszugleichen.

Ausführungsformen von linearen Maschinenelementen betreffen insbesondere Zahnstangen oder Linearführungen. Bei Zahnstangen als lineares Maschinenelement bieten Ausführungsformen zum Beispiel den Vorteil, dass eine Positionierung einer Verzahnung der Zahnstange relativ zu einem Bezugspunkt exakt ausgeführt werden kann. Bei Linearführungen als Maschinenelement bieten Ausführungsformen zum Beispiel den Vorteil, dass eine Montage erleichtert wird.

Typische Ausführungsformen betreffen einen Exzenter für ein Befestigungssystem für ein lineares Maschinenelement.

Typische Exzenter für hierin beschriebene Befestigungssysteme umfassen eine Hülse mit einer exzentrischen Bohrung. Die Bohrung ist üblicherweise kreisrund und zu dem Außenumfang oder der Außenkontur der Hülse exzentrisch ausgerichtet. An einem axialen Ende ist bei typischen Ausführungsformen von Exzentern der Erfindung ein Drehmomentübertragungselement angeordnet. Das Drehmomentübertragungselement ist typischerweise einstückig mit der Hülse gefertigt oder mit einem Fügeverfahren, beispielsweise Schweißen, fest mit der Hülse verbunden. Die Bohrung ist typischerweise in axialer Richtung in dem Exzenter ausgerichtet und durchgreift die Hülse und das Drehmomentübertragungselement. Ausführungsformen umfassen eine freie Zugänglichkeit des Spannelements wenn der Exzenter aufgesetzt ist. Dies wird durch die Bohrung, welche das Drehmomentübertragungselement durchgreift, realisiert. Somit kann das Spannelement nach der Positionierung der Zahnstange mittels Verdrehen des Exzenters angezogen werden.

Die Außenkontur der Hülse des Exzenters ist bei typischen Ausführungsformen rund ausgeführt. Zweckmäßigerweise wird die Außenkontur der Hülse zylinderförmig ausgeführt. Eine zylinderförmige Ausführung ist leicht herstellbar. Bei weiteren Ausführungsformen ist die Außenkontur der Hülse als Nocken oder als halbe Ellipse ausgeführt.

Typischerweise umfasst die Bohrung eine Stufe. Dabei teilt die Stufe üblicherweise die Bohrung in einen ersten Abschnitt im Bereich des Drehmomentübertragungsmittels und einen zweiten Abschnitt im Bereich der Hülse. Die Abschnitte weisen dabei typischerweise unterschiedliche Durchmesser auf und sind beide kreisrund. Die Stufe kann einen definierten Anschlag bilden, um ein richtiges Aufsetzen des Exzenters auf das Spannelement zu erleichtern. Bei weiteren Ausführungsformen weist die Bohrung einen konstanten Durchmesser auf. Dies kann die Fertigung erleichtern.

Typische Ausführungsformen von linearen Maschinenelementen für hierin beschriebene Ausführungsformen von Befestigungssystemen umfassen eine durchgehende Öffnung, in welcher das Spannelement und zumindest ein Teil der Hülse des Exzenters aufgenommen sind oder aufnehmbar sind. Solche linearen Maschinenelemente bieten den Vorteil einer schnellen Montierbarkeit.

Typischerweise umfasst die Öffnung in dem linearen Maschinenelement einen Absatz. Damit ist es möglich, einen ersten Bereich für die Hülse des Exzenters und den Kopf des Spannelementes und einen zweiten Bereich für einen Teil des Schafts des Spannelementes zu schaffen. Damit wird eine Anlagefläche für den Kopf des Spannelementes geschaffen. Typische Ausführungsformen umfassen zumindest eine Öffnung, die auf einer ersten Seite des Absatzes als kreisrundes Loch mit einem ersten, größeren Durchmesser und auf einer zweiten Seite des Absatzes als kreisrundes Loch mit einem zweiten, kleineren Durchmesser ausgebildet sind. Weitere typische Ausführungsformen umfassen zumindest eine Öffnung, die auf einer ersten Seite des Absatzes als Langloch und auf einer zweiten Seite des Absatzes als kreisrundes Loch ausgebildet ist. Beim Anziehen des Exzenters in einem Langloch kann eine eindeutige Krafteinleitung entstehen. Durch das Anpressen der Hülse des Exzenters an eine ebene Fläche entstehen keine Querkräfte, zusätzlich wird eine Selbsthemmung realisiert. Durch horizontale bzw. längs ausgerichtete und vertikale bzw. quer ausgerichtete Langlöcher können unabhängige Einstellmöglichkeiten in zwei Achsrichtungen geschaffen werden. Die Breite des Langlochs ist üblicherweise größer als der Durchmesser des kreisrunden Lochs. Auf diese Weise wird in jeder Montagelage ein Spannen des Spannelementes an dem Absatz der mindestens einen Öffnung möglich. Typischerweise ist der Durchmesser des kreisrunden Lochs kleiner als der Durchmesser des Exzenters oder kleiner als der Durchmesser des Kopfes. Auf diese Weise wird ein Absatz zum Anlegen des Kopfes geschaffen. Bei typischen Ausführungsformen ist die Hülse des Exzenters kürzer als eine Länge der Öffnung oder eine Breite des linearen Maschinenelementes in dem Querschnitt der Öffnung. Bei typischen Ausführungsformen ist die Hülse vollständig in dem Maschinenelement oder in dem Langloch der Öffnung aufnehmbar. Dies ermöglicht eine besonders kompakte Bauweise. Bei typischen Ausführungsformen greift der Exzenter nicht in das Maschinenbett ein. Damit wird eine Verspannung an dieser Stelle vermieden. Typischerweise ist der Exzenter auf das Spannelement aufsetzbar. Dies ermöglicht ein Entnehmen des Exzenters nach Spannen des Spannelementes.

Typischerweise sind zumindest ein Teil der Langlöcher der Öffnungen in Längsrichtung des linearen Maschinenelementes oder horizontal ausgerichtet. In Längsrichtung ausgerichtete Langlöcher bieten den Vorteil, dass das lineare Maschinenelement an eine lineare Maschinenbettstufe angepresst werden kann. Bei typischen Ausführungsformen sind sämtliche Langlöcher der Öffnungen in Längsrichtung des linearen Maschinenelementes oder horizontal ausgerichtet. Damit wird eine Schwächung der Zahnstange minimiert. Bei Ausführungsformen sind zumindest ein Teil der Langlöcher der Öffnungen quer zur Längsrichtung des linearen Maschinenelementes oder vertikal ausgerichtet. Solche Langlöcher können eine Verstellbarkeit oder Verschiebbarkeit in Längsrichtung unter Einwirkung des Exzenters bewirken. Ein vertikal ausgerichtetes Langloch bietet eine axiale Verstellmöglichkeit durch Ausnützen des Exzenters. Beim Verdrehen eines Exzenters kann das lineare Maschinenelement axial bewegt und somit zu einem anderen linearen Maschinenelement eingestellt werden. Bei Ausführungsformen sind vertikal und horizontal ausgerichtete Langlöcher, jeweils mindestens eines, vorgesehen. Damit lassen sich verschiedene Aufgaben erledigen. Somit sind mit Ausführungsformen ein Anpressen eines linearen Maschinenelements und ebenso das Einstellen zweier linearer Maschinenelemente zueinander möglich.

Bei typischen Ausführungsformen von Befestigungssystemen umfasst der Schaft des Spannelements ein Gewinde zum Eingriff in eine Gewindeöffnung des Maschinenbetts. Dies ermöglicht eine einfache und zuverlässige Montage. Weitere Spannelemente umfassen eine Bajonettverbindung, Federelemente oder andere formschlüssige Verbindungen wie Zahnwellenverbindungen zur Verbindung mit dem Maschinenbett.

Bei typischen Ausführungsformen mit einem Langloch beträgt die gerade Länge des Langlochs maximal 20% oder maximal 10% des Durchmessers senkrecht zur geraden Länge oder maximal 5mm oder maximal 3mm. Die gerade Länge gibt dabei üblicherweise den Abstand der beiden begrenzenden Halbkreise der Öffnung an. Die Langlöcher könnten mittels Laserschneiden gefertigt werden oder eingefräst werden. Bei typischen Ausführungsformen ist eine Mehrzahl von Öffnungen in dem linearen Maschinenelement mit jeweils einem Exzenter vorgesehen. Mit einer Mehrzahl von Öffnungen lässt sich das lineare Maschinenelement beispielsweise an mehreren Stellen mit einem Maschinenbett definiert verbinden.

Bei typischen Verfahren wird ein Anpressen des linearen Maschinenelements gegen das Maschinenbett durch einen Exzenter realisiert. Durch ein Verdrehen des Exzenters wird durch die Exzentrizität das lineare Maschinenelement angepresst. Der Exzenter ist typischerweise ausgeführt, so dass er selbsthemmend ist. Bei Ausführungsvarianten von Verfahren der Erfindung wird der Exzenter beim Anziehen des Spannelements gegen ein Verdrehen gesichert, beispielsweise mit einem Schlüssel oder einem Aufsatzteil für das Drehmomentübertragungselement. Typischerweise ist pro Öffnung ein Exzenter vorgesehen. Es können jedoch auch mehr Öffnungen als Exzenter vorgesehen sein, beispielsweise um flexible Möglichkeiten zur Montage zu schaffen. Typische Verfahren von Ausführungsformen zum Befestigen eines linearen Maschinenelementes mit zumindest einer Öffnung, insbesondere einer Zahnstange oder einer Linearführung, in einem Maschinenbett mittels eines Befestigungssystem in einer der hierin beschriebenen Ausführungsformen umfassen ein Ausrichten des Maschinenelementes in dem Maschinenbett, ein Einführen des Spannelementes in die zumindest eine Öffnung des Maschinenelementes, ein Einführen des zumindest einen Exzenters in die zumindest eine Öffnung, bevorzugt in das Langloch der Öffnung, des Maschinenelementes und ein Aufsetzen des Exzenters auf den Kopf des Spannelementes. Der Exzenters wird typischerweise in der Öffnung, bevorzugt in dem Langloch der Öffnung ausgerichtet, um das Maschinenelement zu positionieren. Ein anschließendes Spannen des Spannelementes dient dem Fixieren des Maschinenelementes in dem Maschinenbett.

Nach dem Fixieren des Maschinenelementes kann optional bei Ausführungsformen eine Verstiftung erfolgen. Hierzu werden typischerweise Stiftöffnungen, welche in dem Maschinenelement oder dem Maschinenbett teilweise vorgebohrt sein können, gebohrt und mit Stiften versehen. Die Stifte können eingepresst werden. Solche zusätzlichen Verstiftungen können die Steifigkeit der Anbindung erhöhen und nach einer späteren Demontage einen Zusammenbau wieder erleichtern.

Ausführungsformen ergeben eine Montagezeitersparnis und eine Erhöhung des Komforts. Weiterhin kann durch typische Exzenter die Anpressung gegen das Maschinenbett nach der Montage beibehalten werden. Bei Ausführungsformen können die Exzenter nach Anziehen des Spannelementes entfernt werden. Alternativ zum Verbleib im linearen Maschinenelement kann der Exzenter bei Ausführungsformen nach der Montage wieder entnommen und für weitere Montagen verwendet werden. Typischerweise entstehen zusätzliche Reibkräfte zwischen dem linearen Maschinenelement und dem Maschinenbett. Dies erhöht die Sicherheit oder ermöglicht es, die Spannelemente kleiner zu dimensionieren. Ein weiterer Vorteil kann sein, dass das lineare Maschinenelement mit dem Exzenter von einer Person fixiert werden kann. Die Positionierung eines linearen Maschinenelements zu einem schon montierten linearen Maschinenelement ist einfach und präzise möglich. Da im Maschinenbett nicht zwingend zusätzlichen Bohrungen vorgesehen werden müssen und die Montagezeit sich verkürzt, werden die Montagekosten reduziert. Da keine zusätzlichen Öffnungen für die Montage im linearen Maschinenelement notwendig sind, wird die Steifigkeit nicht beeinflusst.

### Kurze Beschreibung der Zeichnungen

Weitere Vorteile und Merkmale bevorzugter Ausführungsformen der Erfindung werden nachfolgend anhand der beiliegenden Zeichnungen erläutert, wobei die Figuren zeigen:
- Fig. 1: zeigt eine schematische Darstellung eines Teils einer typischen Ausführungsform in einem Querschnitt;
- Fig. 2: zeigt einen Exzenter typischer Ausführungsformen, welcher auch bei dem Ausführungsbeispiel der Figuren 1 und 3 verwendet wird.
- Fig. 3: zeigt eine Seitenansicht eines Teils des Ausführungsbeispiels der Figur 1;
- Fig. 4: zeigt das Ausführungsbeispiel der Figuren 1 und 3 in einer perspektivischen Ansicht;
- Fig. 5: zeigt einen Teil eines weiteren Ausführungsbeispiels in einem Querschnitt;
- Fig. 6: zeigt einen Teil des Ausführungsbeispiels der Fig. 5 in einer Seitenansicht; und
- Fig.7: zeigt das Ausführungsbeispiel der Figuren 5 und 6 in einer perspektivischen Ansicht;

### Beschreibung bevorzugter Ausführungsbeispiele

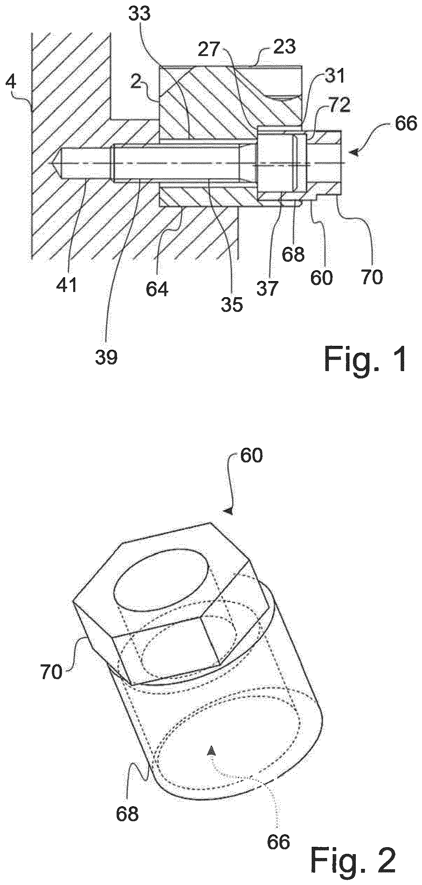

Nachfolgend werden typische Ausführungsformen anhand der Figuren beschrieben, wobei die Erfindung nicht auf die Ausführungsbeispiele beschränkt ist, vielmehr wird der Umfang der Erfindung durch die Ansprüche bestimmt. In den Fig. 1-7 sind typische Ausführungsformen oder Teile von typischen Ausführungsformen gezeigt. Bei der Beschreibung aller Figuren werden gleiche Bezugszeichen für entsprechende Teile verwendet und nicht im Zusammenhang mit jeder einzelnen Figur erneut beschrieben. Einzelne Merkmale oder Teile sind bei verschiedenen Ausführungsformen identisch und werden nicht einzeln immer wieder erläutert.

In der Fig. 1 ist ein Querschnitt einer Ausführungsform eines Befestigungssystems zum Befestigen eines linearen Maschinenelementes in einem Querschnitt gezeigt. Bei der Ausführungsform der Fig. 1 ist ein lineares Maschinenelements 2 in Form einer Zahnstange vorgesehen.

Das lineare Maschinenelement 2 umfasst eine schräg ausgeführte Verzahnung 23. Weiterhin ist in dem Querschnitt der Fig. 1 eine Öffnung zu sehen, welche durch das lineare Maschinenelement 2 hindurchgreift. Die Öffnung umfasst einen Absatz 27. Der Absatz 27 trennt eine erste Seite des Absatzes 27 von einer zweiten Seite des Absatzes 27. Die erste Seite des Absatzes 27 ist als ein Langloch 31 ausgeführt. Die zweite Seite des Absatzes 27 ist als kreisrundes Loch 33 ausgebildet. In der Öffnung mit dem Langloch 31 und dem kreisrunden Loch 33 ist ein Spannelement mit einem Schaft 35 und einem Kopf 37 aufgenommen. Der Durchmesser des Kopfes 37 ist größer als der Durchmesser des kreisrunden Lochs 33. Dadurch kann der Kopf 37 auf dem Absatz 27 anliegen, so dass der Absatz 27 als Widerlager genutzt wird.

Das Spannelement ist mit einem Gewinde 39 in einer Gewindeöffnung 41 eines Maschinenbetts 4 aufgenommen. Durch Anziehen des Spannelementes in der Gewindeöffnung 41 wird das lineare Maschinenelements 2 gegen das Maschinenbett 4 gepresst, so dass eine Lagesicherung erfolgt.

Um das lineare Maschinenelements 2 in einer definierten Lage an dem Maschinenbett 4 anzuordnen, kann das lineare Maschinenelements 2 mit einem Exzenter 60, welcher im Zusammenhang mit der Fig. 2 noch näher erläutert wird, gegen eine Anlagefläche 64 des Maschinenbetts 4 gepresst werden. In dem Exzenter 60 ist eine Bohrung 66 vorgesehen, welche den Exzenter 60 in axialer Richtung durchgreift. Der Exzenter 60 umfasst eine Hülse 68 und ein Drehmomentübertragungsmittel 70. Die Bohrung 66 ist exzentrisch bezüglich der Hülse 68 angeordnet. Dies bedeutet, dass die Mittelachse der Bohrung 66 exzentrisch bezüglich einer Mittelachse der Außenfläche der Hülse 68 ist. Die Bohrung 66 umfasst eine Stufe 72, welche es ermöglicht, dass im Bereich der Hülse 68 ein größerer Innendurchmesser vorgesehen werden kann als im Bereich des Drehmomentübertragungsmittels 70.

Eine Stufe der Bohrung bietet bei typischen Ausführungsformen den Vorteil, dass im Bereich des Drehmomentübertragungsmittels ein größerer Materialquerschnitt zur Verfügung steht, beispielsweise um einen Außensechskant oder einen Außenvierkant zu bilden. Im Bereich der Hülse kann hingegen der Durchmesser größer sein, um ausreichend Platz zu bieten für den Kopf des Spannelementes. Bei weiteren Ausführungsformen ist die Bohrung mit gleichmäßigem Innendurchmesser ohne Stufe vorgesehen, um die Herstellung zu erleichtern.

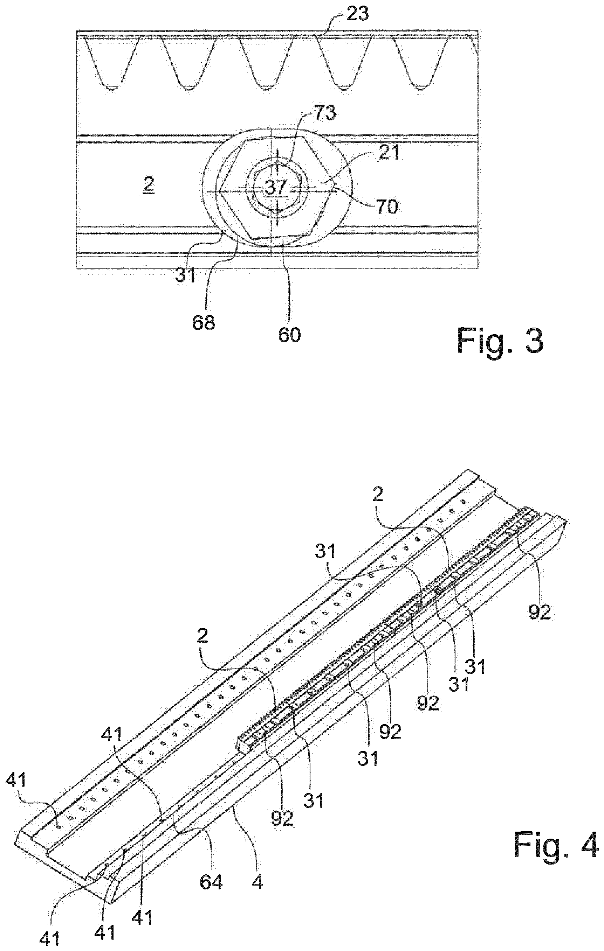

Der Kopf 37 umfasst einen Innensechskant 73, welcher in der Figur 3 gezeigt ist. Mittels des Innensechskants 73 kann das Spannelement auch bei aufgesetztem oder eingesetztem Exzenter 60 angezogen werden, da ein Innensechskant-Schlüssel durch die Bohrung 66 bis zu dem Kopf 37 geführt werden kann.

Nachfolgend werden auch die Figuren 2 bis 4 erläutert, welche im Zusammenhang mit der in der Figur 1 gezeigten Ausführungsform stehen. So zeigt die Figur 2 einen Exzenter, welcher bei typischen Ausführungsformen verwendet werden kann oder der auch selbst einen unabhängigen Aspekt der Erfindung bildet.

Die Fig. 2 zeigt den Exzenter 60 in einer perspektivischen Ansicht, wobei verdeckte Kanten gepunktet gezeigt sind. In der Figur 2 ist wie auch in der Fig. 3 ein Sechskant als das Drehmomentübertragungsmittel 70 deutlich zu erkennen. Durch Anlegen eines Sechskant-Schlüssels an dem Drehmomentübertragungsmittel 70 ist es möglich, den Exzenter 60 zu drehen. Bei dem Ausführungsbeispiel der Figuren 1 und 3 wird der Exzenter 60 dabei um den Kopf 37 des Spannelementes gedreht.

In der Fig. 3 ist eine Seitenansicht des Ausführungsbeispiels der Figur 1 gezeigt. Dabei ist zu erkennen, wie der Exzenter 60 mit der Hülse 68 gegen den Innenumfang des Langlochs 31 drückt. Dadurch wird das lineare Maschinenelement 2 in einer Richtung nach unten in der Figur 3 gegen eine Anlagefläche des Maschinenbetts (in der Fig. 3 nicht gezeigt) gepresst.

Bei weiteren Ausführungsformen wird der Exzenter verwendet, um beispielsweise Zahnstangen in axialer Richtung zu verschieben, wobei durch eine Verdrehung des Exzenters eine exakte Verschiebung möglich ist. Bei solchen Ausführungsformen können zusätzlich oder ausschließlich Öffnungen mit vertikalen oder quer zur Längsrichtung ausgerichteten Langlöcher vorgesehen sein.

In der Fig. 4 ist in einer perspektivischen Ansicht das Ausführungsbeispiel der Figuren 1 und 3 gezeigt. Zwei lineare Maschinenelemente 2, welche als Zahnstangen ausgeführt sind, sind an dem Maschinenbett 4 befestigt. Die linearen Maschinenelemente 2 der Figur 4 werden wie in den Figuren 1 und 3 gezeigt an dem Maschinenbett 4 befestigt. Die linearen Maschinenelementes 2 weisen ausschließlich Langlöcher 31 auf, welche horizontal oder in axialer Richtung des linearen Maschinenelementes 2 ausgerichtet sind. Die Langlöcher 31 der Öffnungen des linearen Maschinenelementes 2 müssen nicht alle mit Spannelementen besetzt sein, dies ist jedoch möglich, falls eine besonders steife Anbindung gewünscht wird. Für geringere Steifigkeit können auch weniger Spannelemente verwendet werden als Langlöcher von Öffnungen vorhanden sind.

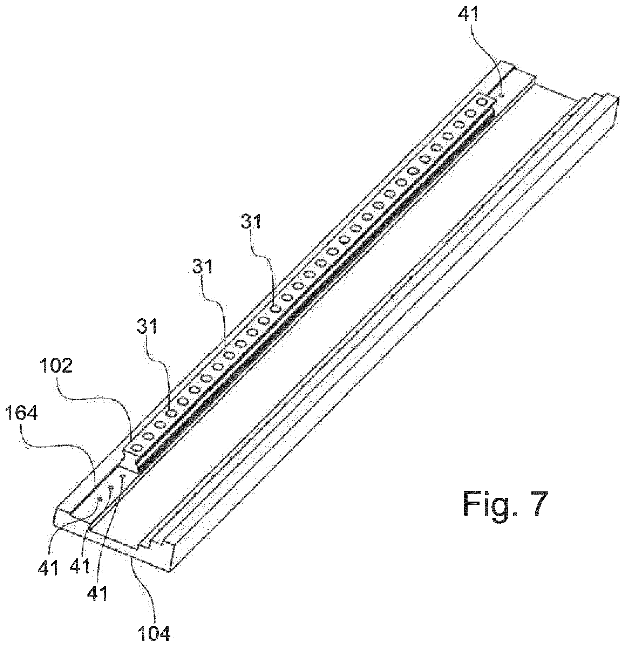

Die Exzenter 60 können bei Ausführungsbeispielen wie dem der Figur 4 mehrmals verwendet werden, indem beispielsweise zuerst das linke der linearen Maschinenelemente 2 befestigt wird und anschließend das rechte der linearen Maschinenelemente 2. Dazu werden die Exzenter 60 zunächst in die Langlöcher 31 des linken linearen Maschinenelementes 2 eingesetzt und nach Anziehen der Spannelemente des linken linearen Maschinenelements 2 wieder entnommen. Die Exzenter 60 werden dann mit neuen Spannelementen in die Langlöcher 31 der Öffnungen des rechten Maschinenelementes 2 eingeführt. Dabei werden die Exzenter 60 nach einem lockeren Eindrehen der Spannelemente in die Gewindeöffnungen 41 des Maschinenelements 4 auf die Köpfe der Spannelemente aufgesetzt, bis die Hülsen 68 der Exzenter 60 an den Absatz 27 (siehe Fig. 1) der Öffnungen anstoßen. Anschließend werden die Exzenter 60 verdreht, so dass das lineare Maschinenelement 2 gegen das Maschinenbett 4 gepresst wird. Mit einem Innensechskant-Schlüssel können dann durch die Bohrung 66 hindurch die Spannelemente durch Eingriff in den Innensechskant 73 angezogen werden. Die Montage ist äußerst schnell und einfach und zuverlässig. In den linearen Maschinenelementen 2 sind Stiftöffnungen 92 vorgesehen, welche zum zusätzlichen Verstiften der linearen Maschinenelemente 2 optional verwendet werden können. Sowohl von den kleineren Stiftöffnungen 92 als auch von den größeren Langlöchern 31 sind wie bei den Gewindeöffnungen 41 nicht alle entsprechenden Elemente in der Fig. 4 mit einem Bezugszeichen versehen, um die Übersichtlichkeit zu verbessern. Dies gilt analog auch für die Fig. 7

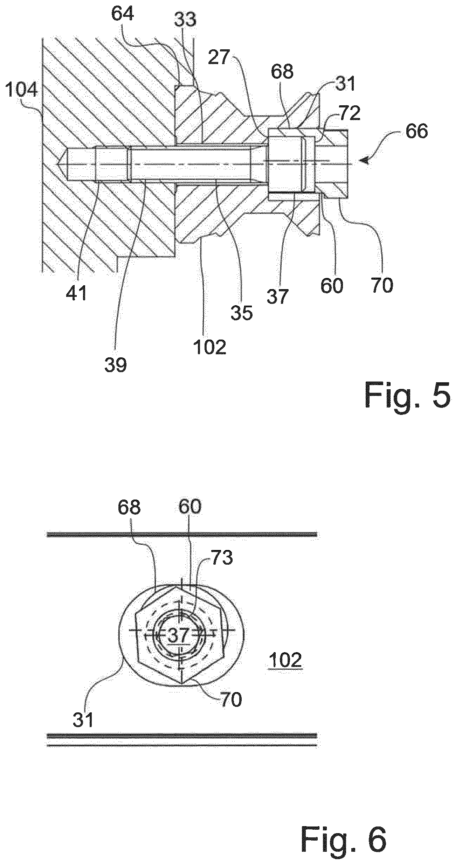

In den Figuren 5 bis 7 ist ein weiteres Ausführungsbeispiel gezeigt. Das Ausführungsbeispiel der Figuren 5 bis 7 betrifft ein als Linearführung ausgebildetes lineares Maschinenelements 102. Wiederum werden für gleiche Teile oder ähnliche Teile gleiche Bezugszeichen verwendet und diese Teile nicht nochmals erläutert, sondern auf die Figurenbeschreibungen der Figuren 1 bis 4 verwiesen. Insbesondere entspricht der Exzenter 60 des Ausführungsbeispiels der Figuren 5 bis 7 dem Exzenter des Ausführungsbeispiels der Figuren 1 bis 4. Allgemein ist jedoch darauf hinzuweisen, dass auch andere Exzenter bei Ausführungsformen verwendet werden, beispielsweise solche mit einem anderen Drehmomentübertragungselement, beispielsweise einem Torx-Verbinder.

Wie das lineare Maschinenelement 2 des Ausführungsbeispiels der Figuren 1, 2 und 4 wird auch das lineare Maschinenelement 102 in Form einer Linearführung gegen eine Anlagefläche 164 gedrückt, indem der Exzenter 60 derart verdreht wird, dass die Hülse 68 gegen die Innenwand eines Langlochs 31 drückt. Wiederum wird wie bei dem Ausführungsbeispiel der Figuren 1, 2 und 4 ein Anziehen der Spannelemente in den Gewindeöffnung 41 verwendet, um das lineare Maschinenelements 102 zu positionieren. Das als Linearführung ausgebildete lineare Maschinenelement 2 umfasst ausschließlich Öffnungen mit in Längsrichtung oder horizontal ausgerichteten Langlöchern 31. Dies macht den Aufbau besonders einfach.

## Patentansprüche

1. Befestigungssystem für ein lineares Maschinenelement (2, 102), insbesondere eine Zahnstange (2) oder eine Linearführung (102), zur Befestigung in einem Maschinenbett (4, 104), mit:
- einem Spannelement, welches einen Schaft (35) und einen Kopf (37) aufweist, wobei der Durchmesser des Kopfes (37) größer ist als der Durchmesser des Schafts (35),
- einem Exzenter (60), welcher eine Hülse (68) mit einer exzentrischen Bohrung (66) und ein Drehmomentübertragungselement (70) umfasst, wobei die Bohrung (66) das Drehmomentübertragungselement (70) durchgreift.
- wobei der Außendurchmesser des Kopfes (37) kleiner ist als der Innendurchmesser der Bohrung (66) oder zumindest im Wesentlichen dem Innendurchmesser der Bohrung (66) entspricht, und mit
- einem linearen Maschinenelement (2, 102), welches eine durchgehende Öffnung aufweist, in welcher das Spannelement und die Hülse (68) des Exzenters (60) aufgenommen sind.

2. Befestigungssystem nach Anspruch 1, wobei das Drehmomentübertragungselement (70) konzentrisch zur Bohrung (66) angeordnet ist.

3. Befestigungssystem nach einem der vorhergehenden Ansprüche, wobei die Bohrung (66) eine Stufe (72) umfasst.

4. Befestigungssystem nach einem der vorhergehenden Ansprüche, wobei die Öffnung einen Absatz (27) umfasst.

5. Befestigungssystem nach Anspruch 4, wobei die Öffnung auf einer ersten Seite des Absatzes (27) als Langloch (31) ausgebildet ist.

6. Befestigungssystem nach Anspruch 5, wobei die Öffnung auf einer zweiten Seite des Absatzes als kreisrundes Loch (33) ausgebildet ist.

7. Befestigungssystem nach einem der vorhergehenden Ansprüche, wobei der Schaft (35) des Spannelements ein Gewinde (39) zum Eingriff in eine Gewindeöffnung (41) des Maschinenbetts (4, 104) umfasst.

8. Verfahren zum Befestigen eines linearen Maschinenelementes (2, 102), insbesondere einer Zahnstange (2) oder einer Linearführung (102), mit zumindest einer Öffnung, in einem Maschinenbett (4, 104) mit einem Befestigungssystem nach einem der vorhergehenden Ansprüche, mit
- Ausrichten des Maschinenelementes (2, 102) in dem Maschinenbett (4, 104),
- Einführen des Spannelementes in die zumindest eine Öffnung des Maschinenelementes (2, 102),
- Einführen des zumindest einen Exzenters (60) in die zumindest eine Öffnung des Maschinenelementes (2, 102) und Aufsetzen des Exzenters (60) auf den Kopf (37) des Spannelementes,
- Ausrichten des Exzenters (60) in der Öffnung, um das Maschinenelement (2, 102) zu positionieren, und
- Spannen des Spannelementes zum Fixieren des Maschinenelementes (2, 102) in dem Maschinenbett (4, 104).

## Claims

1. Fastening system for a linear machine element (2, 102), especially a toothed rack (2) or a linear guide (102) for fastening in a machine bed (4, 104), comprising:
a clamping element having a shank (35) and a head (37), wherein the head (37) has a diameter which is greater than the shank (35) diameter;
an eccentric (60) comprising a sleeve (68) having an eccentric bore (66) and a torque-transmitting element (70), wherein the eccentric bore (66) extends through the torque-transmitting element (70),
wherein the diameter of the head (37) is smaller than the eccentric bore (66) inner diameter or at least corresponds to the eccentric bore (66) inner diameter; and
a linear machine element (2, 102) having a through-opening in which the clamping element and the sleeve (68) of the eccentric (60) are received.

2. Fastening system according to claim 1, wherein the torque-transmitting element (70) is arranged concentrically with respect to the bore (66).

3. Fastening system according to one of the preceding claims, wherein the bore (66) comprises a step (72).

4. Fastening system according to one of the preceding claims, wherein the through-opening comprises a shoulder (27).

5. Fastening system according to claim 4, wherein the through-opening is formed on a first side of the shoulder (27) as an oblong hole (31).

6. Fastening system according to claim 5, wherein the through-opening is formed on a second side of the shoulder as a circular hole (33).

7. Fastening system according to one of the preceding claims, wherein the shank (35) of the clamping element comprises a thread (39) for engagement into a threaded opening (41) of the machine bed (4, 104).

8. Method for the fastening of a linear machine element (2, 102), especially a toothed rack (2) or a linear guide (102), with at least one through-opening, in a machine bed (4, 104) with a fastening system according to one of the preceding claims, with:
orienting the machine element (2, 102) in the machine bed (4, 104);
inserting the clamping element into the at least one through-opening of the machine element (2, 102);
inserting the at least one eccentric (60) into the at least one through-opening of the machine element (2, 102) and mounting the eccentric (60) on the head (37) of the clamping element;
orienting the eccentric (60) in the through-opening in order to position the machine element (2, 102); and
tightening the clamping element in order to fix the machine element (2, 102) in the machine bed (4, 104).

## Revendications

1. Système de fixation d'un élément de machine linéaire (2, 102), en particulier une crémaillère (2) ou un guide linéaire (102) pour la fixation dans une base de machine (4, 104), avec:
- un élément de serrage présentant une tige (35) et une tête (37), le diamètre de la tête (37) étant supérieur au diamètre de la tige (35),
- un excentrique (60) comportant un manchon (68) avec un alésage excentrique (66) et un élément de transmission de couple (70), l'alésage (66) traversant l'élément de transmission de couple (70),
- le diamètre extérieur de la tête (37) étant inférieur au diamètre intérieur de l'alésage (66) ou correspondant au moins sensiblement au diamètre intérieur de l'alésage (66), et
- un élément de machine linéaire (2, 102) présentant une ouverture traversante dans laquelle sont reçus l'élément de serrage et le manchon (68) de l'excentrique (60).

2. Système de fixation selon la revendication 1, dans lequel l'élément de transmission de couple (70) est disposé de manière concentrique à l'alésage (66).

3. Système de fixation selon l'une des revendications précédentes, dans lequel l'alésage (66) comporte un échelon (72).

4. Système de fixation selon l'une des revendications précédentes, dans lequel l'ouverture comporte un décrochement (27).

5. Système de fixation selon la revendication 4, dans lequel l'ouverture est réalisée, d'un premier côté du décrochement (27), sous forme d'un trou oblong (31).

6. Système de fixation selon la revendication 5, dans lequel l'ouverture est réalisée, d'un deuxième côté du décrochement, sous forme d'un trou circulaire (33).

7. Système de fixation selon l'une des revendications précédentes, dans lequel la tige (35) de l'élément de serrage comporte un filet (39) destiné à venir en prise dans une ouverture taraudée (41) de la base de machine (4, 104).

8. Procédé de fixation d'un élément de machine linéaire (2, 102), en particulier une crémaillère (2) ou un guide linéaire (102) avec au moins une ouverture, dans une base de machine (4, 104) par un système de fixation selon l'une des revendications précédentes, avec le fait de
- aligner l'élément de machine (2, 102) dans la base de machine (4, 104),
- introduire l'élément de serrage dans l'au moins une ouverture de l'élément de machine (2, 102),
- introduire l'au moins un excentrique (60) dans l'au moins une ouverture de l'élément de machine (2, 102) et placer l'excentrique (60) sur la tête (37) de l'élément de serrage,
- aligner l'excentrique (60) dans l'ouverture, pour positionner l'élément de machine (2, 102), et
- serrer l'élément de serrage pour fixer l'élément de machine (2, 102) dans la base de machine (4, 104).
